Europäisches Patentamt

European Patent Office

Office européen des brevets

(19)

(11) Numéro de publication: **0 289 426**
**B1**

(12)  **FASCICULE DE BREVET EUROPEEN**

(45) Date de publication du fascicule du brevet:
04.04.90

(51) Int. Cl.⁴: **G06K 7/015**, G06K 13/08

(21) Numéro de dépôt: **88401042.2**

(22) Date de dépôt: **28.04.88**

(54)  **Dispositif de lecture/écriture de cassette et cassette adaptée à ce dispositif.**

(30) Priorité: **29.04.87  FR 8706097**

(43) Date de publication de la demande:
**02.11.88 Bulletin 88/44**

(45) Mention de la délivrance du brevet:
**04.04.90 Bulletin 90/14**

(84) Etats contractants désignés:
**DE ES GB IT**

(56) Documents cités:
**CH-A- 564 816**
**DE-A- 2 506 090**
**DE-A- 3 235 654**
**DE-U- 8 631 861**
**FR-A- 2 266 222**
**FR-A- 2 477 303**
**FR-A- 2 578 072**

**IBM TECHNICAL DISCLOSURE BULLETIN,**
**vol. 27, no. 7B, décembre 1984, pages 4314, 4315, New**
**York, US; G.E. DOODY et al.: "Captured badge reader"**

(73) Titulaire: **JAEGER, 2, rue Baudin,**
**F-92303 Levallois-Perret(FR)**

(72) Inventeur: **Boucher, Alain, 182, rue de Charenton,**
**F-75012 Paris(FR)**
Inventeur: **Guillou, Jean-Pierre, 165, rue Saint-Denis,**
**F-92700 Colombes(FR)**
Inventeur: **Marschall, Eric, 4, rue de Montesquieu,**
**F-95100 Argenteuil(FR)**
Inventeur: **Sadat, Idir, 26, rue du Maine,**
**F-95870 Bezons(FR)**

(74) Mandataire: **Martin, Jean-Jacques et al, Cabinet**
**REGIMBEAU 26, Avenue Kléber, F-75116 Paris(FR)**

# Description

La présente invention concerne un dispositif de lecture/écriture de cassette.

La présente invention est destinée à trouver tout particulièrement application dans la conception d'un système de contrôle et gestion de véhicules automobiles utilisant des cassettes aptes à mémoriser des informations diverses liées aux véhicules, par exemple des informations spécifiques du véhicule, des informations spécifiques du chauffeur ou des informations issues d'un tachygraphe associé au véhicule.

Le document CH-A 564 816 décrit un dispositif de lecture/écriture de cassette comprenant un boîtier pourvu d'un logement possédant une ouverture, apte à recevoir une cassette, et un coulisseau supporté élastiquement dans le logement et qui porte des moyens de lecture/écriture aptes à coopérer avec la cassette.

Le document FR-A 2 266 222 décrit un dispositif de lecture/écriture d'objets portatifs comprenant une alimentation électrique par induction à l'aide de moyens extérieurs à l'objet portatif, des moyens de mémoire intégrés à celui-ci et utilisant des photocoupleurs pour le transfert de l'information.

L'invention propose un dispositif de lecture/écriture de cassette du type connu comprenant un boîtier pourvu d'un logement, possédant une ouverture, apte à recevoir une cassette, et un coulisseau supporté élastiquement dans le logement et qui porte des premiers moyens d'émission/réception aptes à coopérer avec la cassette, caractérisé par le fait que:

– les premiers moyens d'émission/réception comprennent au moins un élément de photocoupleur et ils sont conçus pour coopérer avec des seconds moyens d'émission/réception prévus sur la cassette,

– les premiers moyens d'émission/réception sont prévus sur la face avant du coulisseau dirigée vers l'ouverture du logement,

– les seconds moyens d'émission/réception sont prévus sur la face de la cassette destinée à être portée en regard de la face avant du coulisseau,

– le coulisseau et chaque cassette sont pourvus de structures de centrage sur leurs surfaces en regard munies respectivement des premiers moyens d'émission/réception et des seconds moyens d'émission/réception,

– le coulisseau est suceptible de translation, dans le logement, parallèlement à la direction d'introduction d'une cassette, de sorte que lors de l'insertion d'une cassette dans le logement du boîtier, la cassette contacte le coulisseau puis entraîne un léger recul du coulisseau vers le fond du logement, et

– le coulisseau est en outre susceptible de se déplacer transversalement à la direction d'introduction de la cassette afin d'assurer un auto-centrage du coulisseau sur la cassette et garantir une étroite proximité entre les premiers moyens d'émission/réception et les seconds moyens d'émission/réception lors de l'introduction d'une cassette dans le logement du boîtier.

De préférence, le coulisseau est sollicité élastiquement vers l'ouverture du logement. Cette disposition permet de garantir un autocentrage du coulisseau, de minimiser l'entrefer éventuel et d'assurer l'éjection de la cassette lorsque cela est nécessaire, pour découpler la cassette des premiers moyens d'émission/réception.

Selon une autre caractéristique avantageuse de l'invention, le coulisseau repose contre une butée solidaire du boîtier, par l'intermédiaire d'au moins une structure en forme de couteau.

Selon une autre caractéristique avantageuse de l'invention, le dispositif comprend un verrou apte à venir en prise avec une cassette pour immobiliser celle-ci en contact avec le coulisseau.

De préférence, le verrou est sollicité élastiquement vers une position de travail dans laquelle il est en prise avec la cassette, et il est associé à des moyens d'entraînement aptes à déplacer le verrou dans une position de repos dans laquelle la cassette est libérée.

Grâce à cette disposition, lorsque le verrou est maintenu en position de repos par les moyens d'entraînement, la cassette n'est pas verrouillée dans le logement du boîtier. Ainsi la cassette n'est verrouillée que lorsque les premiers moyens d'émission/réception sont prêts à coopérer avec la cassette.

Selon une autre caractéristique avantageuse de l'invention, le verrou est monté pivotant sur le boîtier entre une position de travail et une position de repos.

Selon une autre caractéristique de l'invention, les moyens d'entraînement comprennent d'une part, une roue dentée solidaire d'une came reposant contre le verrou, et d'autre part un cliquet entraîné sélectivement pour venir en prise avec la roue dentée et assurer une rotation séquentielle de celle-ci.

De préférence le cliquet est entraîné par un électro-aimant.

Selon une autre caractéristique avantageuse de l'invention, la roue dentée est solidaire d'une structure type cage à écureuil composée d'une pluralité de barreaux parallèles équirépartis autour de l'axe de la roue, et le cliquet est solidaire d'une butée apte à venir en prise avec ces barreaux, lors du déplacement du cliquet vers les dents de la roue, pour contrôler l'angle de pivotement de la roue.

Selon une autre caractéristique de l'invention, le coulisseau porte des moyens aptes à détecter la présence d'une cassette contre le coulisseau, le fond du logement est pourvu de moyens aptes à détecter un recul du coulisseau contre le fond du logement, induit par la cassette et il est prévu des moyens aptes à détecter l'état des moyens d'entraînement associés au verrou.

Les moyens de détection sont formés de préférence d'interrupteurs électriques, ils servent à gérer le fonctionnement du dispositif.

La présente invention concerne également une cassette adaptée pour coopérer avec le dispositif de lecture/écriture conforme à l'une des revendications 1 à 13 caractérisée par le fait qu'elle comprend des moyens formant mémoire, un élément photocoupleur d'émission et un élément photocoupleur de réception destinés à coopérer avec des éléments photocoupleurs homologues intégrés au dispositif de lecture /écriture pour la transmission d'information entre le dispositif de lecture/écriture et la cassette, et un enroulement secondaire de transformateur destiné à coopérer avec un enroulement primaire intégré ou dispositif de lecture/écriture, pour assurer l'alimentation électrique, par introduction, de la cassette.

D'autres caractéristiques, but et avantages de la présente invention apparaîtront à la lecture de la description détaillée qui va suivre, et en regard des dessins annexés, donnés à titre d'exemple non limitatif et sur lesquels:

– la figure 1 représente une vue schématique en perspective, partiellement éclatée, d'un dispositif de lecture/écriture de cassette conforme à la présente invention,

– la figure 2 illustre de façon schématique, sous forme de blocs fonctionnels, les éléments essentiels intégrés à une cassette conforme à la présente invention, et les éléments essentiels coopérant intégrés au dispositif de lecture/écriture,

– la figure 3A illustre l'état de contacts électriques de détection lors d'un processus normal d'insertion et d'extraction de cassette,

– la figure 3B illustre l'état des mêmes contacts électriques de détection, lorsque le dispositif de lecture/écriture interdit l'insertion d'une cassette,

–la figure 3C illustre l'état des mêmes contacts électriques de détection lorsque, après insertion normale de la cassette dans le logement du dispositif de lecture/écriture, ce dernier prend l'initiative de l'éjection de la cassette, et

–la figure 3D représente un chronogramme qui illustre le fonctionnement du dispositif lorsque celui-ci après avoir autorisé l'insertion d'une cassette, interdit son retrait.

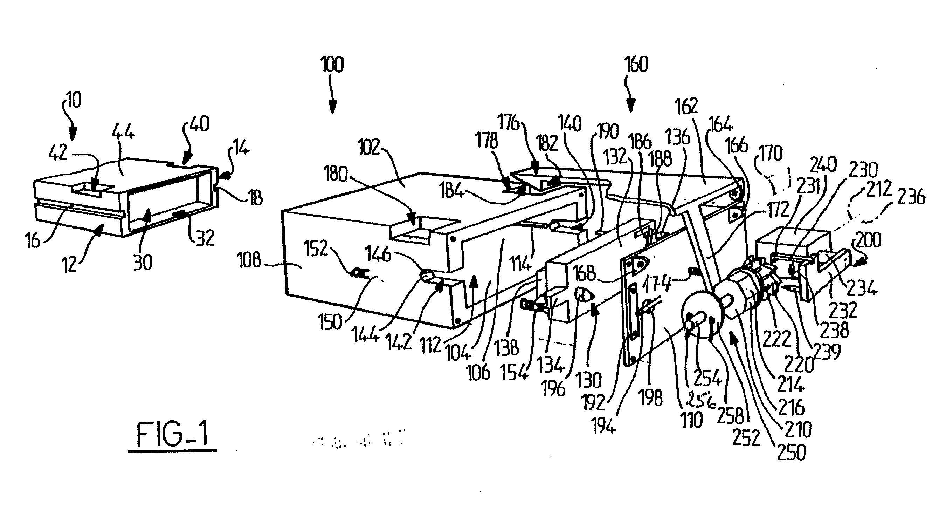

On aperçoit sur la figure 1 annexée le boîtier 100 d'un dispositif de lecture/écriture destiné à recevoir une cassette 10.

Le boîtier 100 est formé de deux parois principales 102, 104, deux parois latérales 106, 108 et un fond 110. Les parois principales 102, 104 sont parallèles entre elles. Les parois latérales 106, 108 sont parallèles entre elles et orthogonales aux parois principales 102, 104. Enfin, le fond 110 est orthogonal aux parois 102, 104, 106 et 108. Les parois 102, 104, 106, 108, en combinaison avec le fond 110, définissent un logement 112 en forme de parallélépipède rectangle, ouvert à l'opposé du fond 110. Le logement 112 est destiné à recevoir la cassette 10.

Comme illustré sur la figure 1, cette cassette 10 possède un carter dont l'enveloppe a la forme générale d'un parallélépipède rectangle. Sur deux faces opposées 12, 14, la cassette 10 est pourvue de rainures longitudinales 16, 18 parallèles entre elles et parallèles à la direction d'introduction de la cassette.

Ces rainures 16, 18 sont destinées à être engagées sur des rails en forme de nervure longitudinale portés par la face interne des parois latérales 106, 108, telle que le rail référencé 114 sur la figure 1.

La coopération ainsi définie entre les rainures 16, 18 prévues sur la cassette 10 et les rails 114 prévus dans le logement 112 est destinée à garantir un autocentrage de la cassette 10 dans le logement 112.

Bien entendu, le cas échéant, la cassette 10 pourrait être pourvue de moyens de guidage en forme de nervures longitudinales en saillie destinées à pénétrer dans des rainures en creux homologues prévues dans le logement 112.

De préférence, les rainures 16, 18, possèdent des largeurs différentes ; il en est de même des rails 114 prévus dans le logement 112, qui restent respectivement appairés aux rainures 16, 18. Dans un tel cas, les rainures 16, 18 et rails 114 servent de détrompeur en définissant une seule possibilité d'insertion de la cassette 10 dans le logement 112.

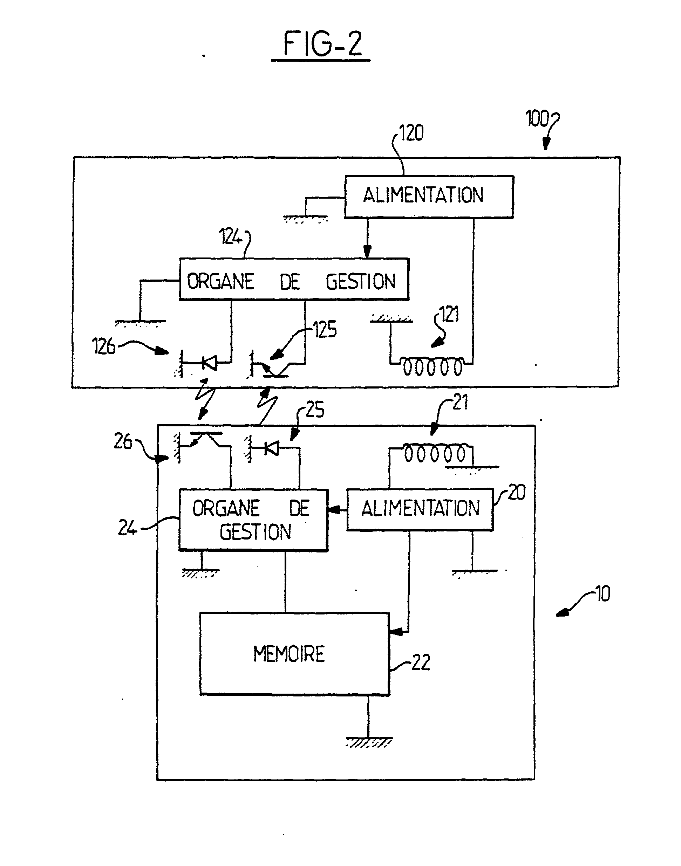

On a illustré schématiquement sur la figure 2 annexée, la structure préférentielle des moyens essentiels intégrés à la cassette 10.

Selon le mode de réalisation préférentiel illustré sur la figure 2, la cassette 10 comprend un module formant mémoire 22, un module formant organe de gestion 24 et un module d'alimentation 20 assurant l'alimentation électrique des modules 22 et 24 précités.

En regard le dispositif de lecture/écriture 100 comprend de préférence un module d'alimentation 120 et un module de gestion 124. Le module d'alimentation 120 est chargé par un enroulement primaire 121 destiné à être couplé à un enroulement secondaire 21 intégré à une cassette 10 et attaquant le module d'alimentation 20. Ainsi, le couplage défini entre les enroulements primaire et secondaire 121 et 21 permet d'assurer l'alimentation électrique par induction de la cassette 10.

Par ailleurs, l'organe de gestion 24 intégré à la cassette 10 est relié à un élément photocoupleur d'émission 25, tel qu'une diode LED, et à un élément photocoupleur de réception 26, tel qu'un phototransistor, destinés à coopérer respectivement avec des éléments photocoupleurs homologues 125, 126, intégrés au dispositif de lecture/écriture et reliés à l'organe de gestion 124 pour assurer la transmission d'informations entre le dispositif de lecture/écriture 100 et la cassette 10.

Cette transmission d'informations est contrôlée par les organes de gestion 124 et 24.

La structure des modules 20, 22, 24 et 120, 124 dépasse le contexte de la présente invention et ne sera donc pas décrite plus en détail par la suite.

On notera cependant que l'enroulement primaire 121 et les éléments photocoupleurs 125, 126, sont portés par un coulisseau 130, tandis que l'enroulement secondaire 21 et les éléments photocoupleurs 25, 26 sont positionnés au niveau du fond 30 de la cassette.

Le coulisseau 130 a la forme générale d'un bloc parallélépipèdique s'étendant parallèlement au fond 110. Il est supporté élastiquement dans le logement 112 pour assurer son autocentrage sur la cassette 10, celle-ci restant guidée par les rails 114. L'homme de l'art comprendra aisément que l'autocentrage du coulisseau 130 sur la cassette 10 a pour but essentiel de minimiser l'entrefer entre l'enroulement primaire 121 et l'enroulement secondaire 21 et de garantir une étroite proximité entre les éléments photocoupleurs 26, 25 et 126, 125 associés.

Selon le mode de réalisation particulier illustré sur la figure 1 annexée, le coulisseau 130 comprend un bloc 132 parallélépipédique parallèle au fond 110, pourvu de deux doigts de guidage latéraux 134, 136 et d'une structure d'autocentrage 138.

Les doigts de guidage 134, 136 s'étendent dans des directions opposées sur des faces latérales opposées du coulisseau 130. Les doigts de guidage 134, 136 s'étendent dans une direction générale perpendiculaire aux parois latérales 106, 108 du boîtier 100.

Les doigts de guidage 134, 136 sont engagés dans des chambres 140, 142 ménagées dans les parois latérales 106, 108.

Les chambres 140, 142 possèdent une section droite, considérée parallèlement au fond 110, constante, ou le cas échéant divergeant légèrement vers le fond du logement 112. De plus, la section droite des chambres 140, 142 est au moins légèrement supérieure à la section droite des doigts de guidage 134, 136. Ainsi, les doigts de guidage 134, 136 et le coulisseau 130 associé sont, d'une part, susceptibles de translation,dans le logement 112, parallèlement à la direction d'introduction de la cassette 10 (parallèlement aux rails 114) d'autre part, susceptibles de déplacement transversalement à la direction d'introduction de la cassette pour assurer l'autocentrage du coulisseau 130 sur la cassette 10.

Les chambres 140, 142 sont interrompues sur l'avant, c'est-à-dire en direction de l'ouverture du logement 112 par deux surfaces planes (telles que les surfaces référencées 144 et 146 pour la chambre 142) qui s'étendent perpendiculairement aux parois latérales 106, 108 et convergent en direction de l'ouverture du logement 112 pour délimiter un angle rentrant.

Deux ressorts de traction, tels que le ressort référencé 150 sur la figure 1,sont engagés entre le boîtier 100 et le coulisseau 130 pour solliciter, au repos, les doigts de guidage 134, 136 contre les surfaces 144, 146 précitées limitant vers l'avant les chambres 140, 142.

Selon le mode de réalisation illustré sur la figure 1 annexée, le ressort de traction 150 est engagé par ses extrémités sur des tétons 152, 154, solidaires respectivement de la paroi latérale 108 et du doigt de guidage 134.

On notera à l'examen de la figure 1 annexée que pour garantir un pré-centrage du coulisseau 130 dans le logement 112, les doigts de guidage 134, 136 reposent contre les surfaces 144, 146 précitées par l'intermédiaire d'une structure en forme de couteau. Cette structure en forme de couteau est constituée par deux surfaces planes prévues sur la face avant des doigts de guidage 134, 136, c'est-à-dire en direction de l'ouverture du logement 112, qui s'étendent transversalement aux parois latérales 106, 108 et convergent, en forme de prisme triangulaire, en direction de l'ouverture du logement 112.

La structure d'autocentrage 138 est formée en saillie sur la face avant du coulisseau 130 dirigée vers l'ouverture du logement 112. La structure d'autocentrage 138 loge l'enroulement primaire 121 et les éléments photocoupleurs 125, 126. Elle possède une enveloppe complémentaire d'une cavité 32 prévue au niveau du fond 30 de la cassette 10.

Selon le mode de réalisation illustré sur la figure 1 annexée, la structure de guidage 138 et la cavité 32 sont délimitées par une enveloppe en forme de tronc de pyramide.

Le dispositif de lecture/écriture 100 comprend également un verrou 160 adapté pour venir en prise avec la cassette 10 pour immobiliser celle-ci à l'intérieur du logement 112, en contact avec le coulisseau 130.

Selon le mode de réalisation illustré sur la figure 1 annexée, le verrou 160 comprend une palette plane 162. La palette 162 s'étend parallèlement à la paroi principale 102 du boîtier, sur l'extérieur de celle-ci.

La palette 162 est montée à pivotement, sur le fond 110, par l'intermédiaire d'ailettes 164, 166 et 168, autour d'un axe 170 qui s'étend transversalement à la direction d'introduction de la cassette et perpendiculairement aux parois latérales 106, 108 du boîtier.

La palette 162 est solidaire d'un bras de commande 172. Le bras de commande 172 s'étend sensiblement perpendiculairement à la palette 162, soit parallèlement au fond 110, sur l'extérieur de celui-ci.

Un ressort de compression 174 est intercalé entre le fond 110 du boîtier et le bras de commande 172 pour solliciter le verrou 160 dans une position de travail dans laquelle le bord avant (le plus proche de l'ouverture du logement 112) de la palette 162 repose contre la surface extérieure de la paroi principale 102 du boîtier.

Par ailleurs, la palette 162 est pourvue, en position adjacente à son bord libre avant (le plus proche de l'ouverture du logement 112) et au voisinage des parois latérales 106, 108 du boîtier, de deux dents 176 aptes à venir en prise avec la cassette 10.

Plus précisément encore, les dents 176 prévues sur le verrou 160 sont prévues en regard de découpes 178, 180 ménagées dans la paroi principale 102 supérieure du boîtier pour permettre aux dents 176 d'atteindre la cassette 10 et de pénétrer dans des cavités 40, 42 ménagées dans le carter de la cassette 10.

Selon le mode de réalisation illustré sur la figure 1 annexée, les cavités 40, 42 ont la forme de concavités parallélépipédiques qui débouchent à la fois sur la surface supérieure 44 de la cassette (adjacente à l'utilisation à la paroi principale supérieure 102 du boîtier), et sur les parois latérales 12 et 14 de la cassette.

Les dents 176 ont une section droite, considérée perpendiculairement au plan moyen de la palette 162, de forme triangulaire. Plus précisément, les dents 176 sont délimitées sur l'arrière par une surface plane de retenue 182 qui s'étend parallèlement au fond 110 du boîtier, soit à l'opposé de l'ouverture du logement 112. Les dents 176 sont délimitées sur l'avant par une paroi plane 184 qui converge vers l'extérieur du boîtier 100 en direction de l'ouverture du logement 112.

Le verrou 160 est ainsi sollicité élastiquement par le ressort 174 vers une position de travail dans laquelle les dents 176 viennent en prise avec les cavités 40, 42 de la cassette 10 pour maintenir celles-ci dans le logement 112. Cependant, le verrou 160 est associé à des moyens d'entraînement 200 aptes à déplacer le verrou 160 dans une position de repos, telle qu'illustrée sur la figure 1 annexée, dans laquelle les dents 176 étant retirées vers l'extérieur du logement 112, la cassette 10 est libérée.

Les moyens d'entraînement 200 comprennent une came 210 entraînée par un système du type roue à rochet comprenant une roue dentée 220 et un cliquet 230.

La came 210 est solidaire de la roue dentée 220. Celles-ci sont guidées à rotation autour d'un axe 212 parallèle au fond 110 et orthogonal aux parois latérales 106, 108.

Le cliquet 230 est déplacé contre les dents de la roue 220 par un électro-aimant 240.

Plus précisément encore, le cliquet 230 est monté à pivotement sur un équipage 232 solidaire du plongeur 234 de l'électro-aimant 240.

L'axe du plongeur 234 s'étend parallèlement à la direction d'introduction de la cassette 10 dans le logement 112.

L'équipage 232 s'étend transversalement à cette direction d'introduction, soit parallèment au fond 110.

Le cliquet 230 est porté à pivotement sur l'équipage 232 autour d'un axe 236 parallèle à l'axe 212 précité.

Un ressort 238 intercalé entre le cliquet 230 et l'équipage 232 sollicite le cliquet 230 vers une position de repos telle que l'extrémité libre 231 du cliquet 230 vienne en prise avec les dents de la roue 220 lorsque le cliquet 230 est déplacé en rapprochement de la roue 220 par l'électro-aimant 240. Cependant, le ressort 238 associé au cliquet 230 permet à ce dernier de se soulever pour échapper de la roue 220 lorsque l'équipage 232 et le plongeur 234 sont déplacés en retour en éloignement de la roue 220.

La came 210 est placée en regard du bras de commande 172 du verrou. Le ressort 174 intercalé entre le fond 110 du boîtier et le bras de commande 172 sollicite ce dernier en appui contre la came 210.

La came 210 définit alternativement sur sa périphérie des profils bas 214 (rapprochés de l'axe 212) et des profils hauts 216 (éloignés de l'axe 212).

Lorsque le bras de commande 172 du verrou repose contre un profil bas 214 de la came 210, le ressort 174 sollicite le verrou 160 dans la position de travail précitée dans laquelle les dents 176 pénètrent dans le logement 112 par l'intermédiaire des découpes 180, 182 pour venir en prise le cas échéant avec une cassette 10.

Par contre, lorsque le bras de commande 172 repose contre un profil haut 216 de la came 210, le ressort 174 est comprimé et la came 210 impose au verrou 160 une position de repos dans laquelle les dents 176 n'interfèrent pas avec le logement 112 et la cassette 10 est donc libérée.

Selon le mode de réalisation illustré sur la figure annexée, le profil de la came 210 a une section droite, transversale à l'axe 212, de forme octogonale. La came 210 représentée possède par conséquent 4 profils bas 214 et 4 profils hauts 216 équirépartis autour de l'axe 212.

La roue 220 possède par conséquent 8 dents permettant de placer alternativement un profil bas 214 et un profil haut 216 en regard du bras de commande 172.

Par ailleurs, la roue dentée 220 est solidaire d'une structure 222 du type cage à écureuil. Cette structure 222 est placée entre la roue dentée 220 et la came 210. Elle est composée d'une pluralité de barreaux parallèles équirépartis autour de l'axe 212 de la roue. Les barreaux composant la structure 222 sont en nombre égal aux dents prévues sur la roue 220.

La structure 222 coopère avec une butée 239 solidaire de l'équipage 232. La butée 239 est formée d'une pointe s'étendant parallèlement à la direction d'introduction de la cassette 10, sur la surface avant de l'équipage 232.

Ainsi, la butée 239 est destinée à pénétrer entre deux barreaux composant la structure 222 lorsque l'équipage 232 est déplacé vers l'avant par l'électro-aimant 240 pour contrôler avec précision l'angle de pivotement de la roue 220 et donc la position de la came 210.

Le coulisseau 130 est par ailleurs équipé de moyens aptes à détecter la présence d'une cassette 10 contre le coulisseau 130. Ces moyens de détection sont de préférence formés d'au moins un interrupteur électrique. Selon le mode de réalisation illustré schématiquement sur la figure 1 annexée, ces moyens de détection comprennent une piste 186, une lamelle 188 et un doigt 190. La piste 186, électriquement conductrice, est supportée par la face arrière du coulisseau 130. La lamelle 188 également électriquement conductrice est sollicitée en appui contre la piste 186. Le doigt 190 s'étend parallèlement à la direction d'introduction de la cassette 10 et traverse libre de coulissement le coulisseau 130. Le doigt 190 est placé en regard de la lamelle 188. En l'absence de cassette 10 à l'intérieur du logement 112 le doigt 190 est repoussé vers l'avant par la lamelle 188 et celle-ci repose contre la piste 186. L'interrupteur correspondant est fermé. Par contre, lorsqu'une cassette 10 est introduite dans le logement 112, le doigt 190 est repoussé vers l'arrière et déplace la lamelle 188 en éloignement de la piste 186 pour ouvrir l'interrupteur correspondant.

Le dispositif de lecture/écriture comprend en outre des moyens aptes à détecter un recul du coulisseau 130 contre le fond 110 du boîtier.

Là encore, selon un mode de réalisation illustré sur la figure 1 annexée, les moyens de détection précités sont formés d'un interrupteur électrique. Ils comprennent pour l'essentiel une piste 192, une lamelle 194 et un doigt 196.

La piste électriquement conductrice 192 est supportée par la face arrière du fond 110. La lamelle 194 portée également par la face arrière du fond 110 est sollicitée élastiquement au repos contre la piste 192. Le doigt 196 est formé en saillie sur la face arrière du coulisseau 130. Le doigt 196 est aligné sur une ouverture 198 ménagée dans le fond 110 du boîtier en regard de la lamelle 194.

L'interrupteur électrique formé par la piste 192 et la lamelle 194 permet de détecter des demandes d'insertion ou d'extraction de cassette 10 illustrées, comme cela sera décrit plus en détail par la suite, par un recul du coulisseau 130.

Lorsque le coulisseau 130 est reculé à proximité immédiate du fond 110 par une cassette 10, le doigt 196 pénètre dans l'ouverture 198 pour déplacer la lamelle 194 en éloignement de la piste 192 et ouvrir l'interrupteur électrique correspondant. Par contre, lorsque le tiroir 130 est rappelé en éloignement du fond 110 par le ressort 150, la lamelle 194 repose élastiquement contre la piste 192 et ferme l'interrupteur électrique correspondant.

Enfin, comme illustré schématiquement sur la figure 1 annexée, le dipsositif de lecture/écriture comprend en outre des moyens 250 aptes à détecter l'état des moyens d'entraînement associés au verrou, et plus précisément la position angulaire de la came 210.

Là encore, selon le mode de réalisation illustré sur la figure 1 annexée, les moyens de détection 250 sont formés d'un interrupteur électrique.

Plus précisément encore, selon le mode de réalisation illustré, les moyens de détection 250 comprennent un disque 252 porté par l'arbre 254 de la came et deux lamelles élastique électriquement conductrices 256, 258 reposent contre des pistes électriquement conductrices portées par le disque 252. Ces pistes électriquement conductrices sont conformées de telle sorte que l'état de liaison électrique entre les lamelles 256, 258 reflètent fidèlement la position angulaire de la came 210.

Bien entendu la structure des moyens détectant la présence d'une cassette 10 contre le coulisseau 130, des moyens détectant le recul du coulisseau 130 et des moyens détectant la position angulaire de la came 210, correspondant à ces interrupteurs électriques selon l'illustration annexée, pourra faire l'objet de nombreux modes de variantes de réalisation.

La gestion des différents contacts électriques précités et la commande de l'électro-aimant 240 ainsi que celle de l'alimentation de la cassette par l'intermédiaire des enroulements 21, 121 est faite par "un système intelligent" qui contrôle en permanence tout changement d'état des contacts et les actions à effectuer en fonction de la nouvelle configuration.

En cas de demande d'insertion ou d'extraction par l'opérateur, détectée par l'interrupteur 192-194, le système peut autoriser ou non la demande.

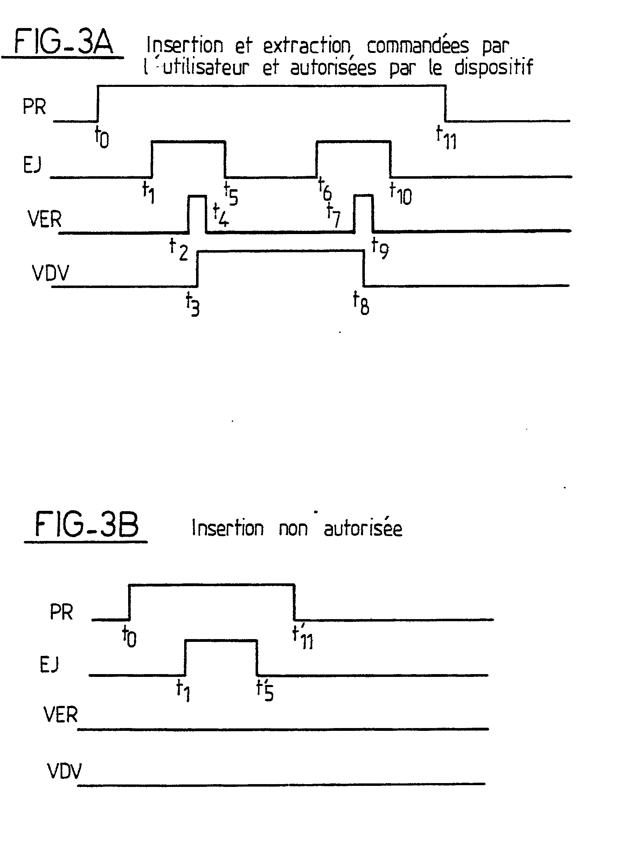

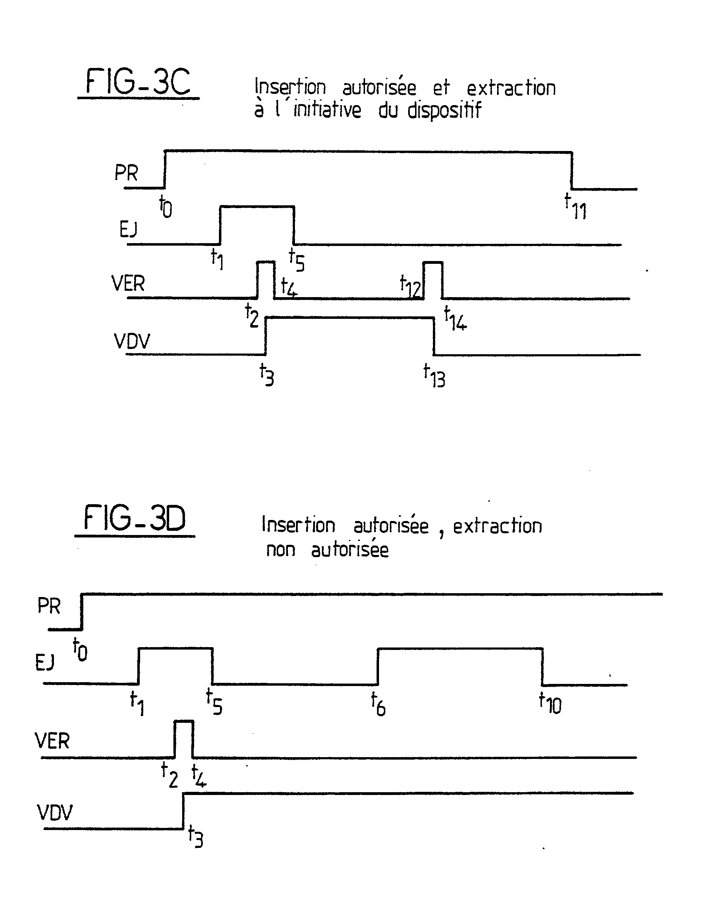

On va maintenant décrire le fonctionnement général du dispositif en regard des chronogrammes illustrés sur les figures 3A, 3B et 3C.

Sur ces chronogrammes on a illustré sous la référence PR l'état de l'interrupteur électrique 186-188 détectant la présence d'une cassette 10 contre le coulisseau 130. Selon l'illustration arbitraire annexée, le signal PR de niveau bas corespond à la fermeture de l'interrupteur 186, 188, soit à l'absence de cassette. Inversement, le niveau haut du signal PR correspond à l'état ouvert de l'interrupteur 186, 188, soit à la présence d'une cassette.

De même, on a illustré sous la référence EJ l'état de l'interrupteur électrique 192-194 de demande d'insertion/extraction. Le niveau bas du signal EJ correspond à l'état fermé de l'interrupteur 192, 194, soit à l'absence de sollicitation d'une cassette vers le fond du logement. Inversement le niveau haut du signal EJ correspond à l'état ouvert de l'interrupteur 192, 194, soit à une sollicitation d'une cassette 10 et du coulisseau 130 associé vers le fond du logement 112.

On a illustré schématiquement sous la référence VER l'état du signal de commande appliqué à l'électro-aimant 240.

Enfin, on a illustré schématiquement sous la référence VDV l'état des contacts électriques 256-258 détectant la position de la came 210 et donc du verrou 160.

Le niveau bas du signal VDV correspond à l'état déverrouillé du verrou 160 (dent 176 à l'extérieur du logement 112). Inversement le niveau du signal VDV lié à l'interrupteur 256-258 correspond à l'état verrouillé du verrou 160 (dent 176 à l'intérieur du logement 112).

Comme illustré schématiquement sur la première ligne de la figure 3A, lors de l'introduction d'une cassette 10 dans le logement 12 contre le coulisseau 130, le signal PR passe du niveau logique bas au niveau logique haut à l'instant t). Cette transition du signal PR est induite par le doigt 190 qui déplace la lamelle 188 en éloignement de la piste 186.

Si l'utilisateur souhaite obtenir un transfert d'informations entre la cassette 10 et le dispositif de lecture/écriture, il doit solliciter un verrouillage de la cassette 10 dans le logement 112. Pour cela, il doit appuyer à fond la cassette 10 dans le logement 112 pour induire un recul du coulisseau 130. Ce recul du coulisseau 130 provoque par l'intermédiaire du doigt 196 l'ouverture de l'interrupteur 192, 194, et de là le passage du signal EJ de l'état bas au niveau haut à l'instant t↓

Comme illustré schématiquement sur la troisième ligne de la figure 3A, si le dispositif de lecture/écriture permet l'insertion de la cassette 10, le signal logique VER passe du niveau bas au niveau haut à l'instant t@. Le système applique alors une impulsion de commande VER à l'électro-aimant 240 pour faire avancer la came 210 d'un pas. Ce déplacement de la came 210 est détecté par les moyens interrupteurs 256, 258, le signal VDV passant du niveau bas au niveau haut à l'instant t#. A cet instant, un profil bas de la came 210 est placé en regard du bras de commande 172 et le ressort 174 sollicite le verrou 160 dans une position de travail dans laquelle les dents 176 sont en prise avec les cavités 40, 42 pour verrouiller la cassette 10. On notera que la butée 239 qui interfère avec la structure 222 limite l'angle de pivotement de la came 210.

Le signal de commande VER retombe au niveau bas à l'instant t$. La durée de l'impulsion de commande VER séparant les temps t@ et t$ peut être par exemple de l'ordre de 300 ms.

Le verrou 160 étant déplacé en position de travail, l'utilisateur peut relâcher sa pression sur la cassette 10. Le ressort 150 déplace alors la cassette 10 et le coulisseau 130 associé vers l'ouverture du logement 112, la cassette 10 restant en prise avec les dents 176 du verrou. L'interrupteur 192, 194 repasse alors à l'état fermé et le signal EJ retombe au niveau bas à l'instant t&

Dans le cas où l'utilisateur souhaite ultérieurement retirer la cassette, il doit réitérer la sollicitation de la cassette 10 vers le fond du logement 112.

Cette sollicitation provoque une nouvelle ouverture de l'interrupteur 192-194 associé et induit un nouveau passage du signal EJ du niveau bas au niveau haut à l'instant t^. Si le système permet l'extraction de la cassette, il coupe l'alimentation de la cassette puis provoque le passage du signal de commande VER du niveau bas au niveau haut à l'instant tA. L'électro-aimant 240 est alors à nouveau alimenté et provoque l'avance de la came 210 d'un pas. Ce déplacement est détecté par l'interrupteur 256-258 et le signal VDV passe du niveau haut au niveau bas à l'instant t*. Un profil haut 216 de la came 210 est alors placé en regard du bras de commande 172 et le verrou 160 est placé en position de repos. Les dents 176 sont déplacées à l'extérieur du logement 112 et la cassette 10 est libérée.

A l'instant t( le signal de commande VER repasse du niveau haut au niveau bas. L'impulsion de commande de l'électro-aimant 240 est alors interrompue.

Là encore, le pas angulaire de déplacement de la came 210 entre les instants tA et t( est contrôlé par la butée 239 coopérant avec la structure 222.

A l'instant t!) l'utilisateur peut relâcher sa pression sur la cassette. Le coulisseau 130 et la cassette 10 sont alors rappelés vers l'ouverture du logement 112. L'interrupteur 192-194 est à nouveau fermé et le signal EJ repasse du niveau haut au niveau bas à l'instant t!)

Lorsque l'utilisateur retire la cassette à l'instant t!,! l'interrupteur 186-188 est à nouveau fermé et le signal PR passe également du niveau haut au niveau bas.

Le dispositif est alors près pour une nouvelle insertion de cassette.

Selon l'illustration donnée sur la figure 3A l'impulsion VER de commande de l'électro-aimant pour déverrouillage du verrou est délivrée par le dispositif avant que l'utilisateur ne relâche la pression sur la cassette à l'instant t!) Cependant, cette impulsion peut le cas échéant n'être délivrée que postérieurement à l'instant t!)si cela est requis par le dispositif.

Le chronogramme illustré sur la figure 3A correspond aux phases d'introduction et d'extraction d'une cassette commandées par l'utilisateur et autorisées par le dispositif de lecture/écriture.

On comprendra que grâce à la structure de l'invention lorsqu'une cassette est introduite dans le boîtier, dans un premier temps le coulisseau 130 est désolidarisé du boîtier, puis dans un second temps rendu solidaire de la cassette pour se positionner avec précision par rapport à celle-ci.

Le chronogramme de la figure 3B correspond au cas où le dispositif de lecture/écriture n'autorise pas l'insertion de la cassette et donc n'autorise pas le verrouillage de celle-ci.

Dans ce cas, comme illustré sur la troisième ligne de la figure 3B, le signal de commande VER appliqué à l'électro-aimant 240 ne change pas d'état lors de la demande d'insertion provoquée par l'utilisateur (signal EJ au niveau haut). En conséquence, l'interrupteur 256-258 ne change pas d'état et le signal VDV reste au niveau bas. Dans cette hypothèse, l'utilisateur est contraint de relâcher sa pression sur la cassette à l'instant t5 auquel le signal EJ repasse du niveau haut au niveau bas et de retirer la cassette du logement 112 à l'instant t% où le signal PR repasse du niveau haut au niveau bas.

La figure 3C correspond au cas où après avoir autorisé l'introduction et le verrouillage d'une cassette, le dispositif de lecture/écriture prend l'initiative de l'extraction.

Dans ce cas, le dispositif de lecture/écriture génère, lorsque requis, à l'instant t!@le passage du signal VER du niveau bas au niveau haut. La came 210 est alors entraînée à rotation d'un pas pour placer un profil haut en regard du bras de commande 172 et déverrouiller le verrou 160. La cassette 10 et le coulisseau 130 sont alors sollicités vers l'ouverture du logement 112 par le ressort 150 comme détecté par le passage du signal VDV du niveau haut au niveau bas à l'instant t!# Le signal VER repasse du niveau haut au niveau bas à l'instant t!$ Cet instant correspond à la fin de l'impulsion de commande appliquée à l'électro-aimant 240.

L'utilisateur doit alors retirer la cassette 10. Ce retrait est détecté par le passage du signal PR du niveau haut au niveau bas à l'instant t!.!

La figure 3D correspond enfin au cas où après avoir autorisé l'insertion et le verrouillage d'une cassette (impulsion de commande VER entre les instants t@-t$ et détection par le passage du signal VDV du niveau bas au niveau haut à l'instant t#) le dispositif de lecture/écriture interdit l'extraction d'une cassette lorsque cela est requis par l'utilisateur à l'instant t^ (recul de la cassette et passage du signal EJ du niveau bas au niveau haut), en effet, après l'instant t^ de détection d'une demande d'extraction par passage du signal EJ du niveau bas au niveau haut, le dispositif de lecture/écriture n'émet aucun signal de commande VER au niveau haut pour assurer le déplacement de la came 210. Le verrou 160 reste donc en position de travail. Le signal VDV reste au niveau haut.

L'utilisateur est donc contraint de relâcher sa pression sur la cassette 10 à l'instant t!) De même, le signal PR de présence de cassette reste au niveau haut.

De préférence, un voyant placé sur la face avant du dispositif de lecture/écriture permet de visualiser la présence ou l'absence d'une cassette et l'état du verrou 160 en fonction de l'état des signaux PR et EJ et VDV.

Par ailleurs, l'alimentation de la cassette par l'intermédiaire des enroulements 21-121 est de préférence synchronisée sur l'émission des signaux VER, afin de n'initier l'alimentation de la cassette qu'après verrouillage de celle-ci, et afin d'interrompre l'alimentation de la cassette avant le déverrouillage de celle-ci.

On notera que dans l'hypothèse où le verrou 160 est placé en position de travail verrouillée (dent 176 dans le logement 112), en l'absence de cassette , une cassette peut cependant être introduite sans dommage dans le logement 112. En effet, la cassette lorsqu'elle est insérée glisse sur la rampe 184 formée sur les dents 176 pour déplacer le verrou 160 vers la position de repos par compression du ressort 174, le verrou étant ramené en position verrouillée, pour interdire le retrait de la cassette dès lors que les cavités 40, 42, dépassent les dents 176. Dans ce dernier cas de figure avant l'insertion de la cassette, les signaux PR, EJ et VER sont au niveau bas tandis que le signal VDV est au niveau haut puisque le verrou est en position verrouillée. Lors de l'insertion de la cassette, le signal PR passe du niveau bas au niveau haut. Les autres signaux ne changent pas d'état. La cassette étant automatiquement verrouillée, il n'est pas nécessaire que l'utilisateur requiert le verrouillage. Si toutefois l'utilisateur requiert par erreur le verrouillage il sollicite pour cela la cassette contre le fond du logement. De ce fait, le signal EJ passe du niveau bas au niveau haut. Toutefois le verrou étant déjà en position de travail cette demande n'est pas suivie d'effet, les autres signaux ne changent pas d'état. Les signaux PR et VDV restent au niveau haut ; le signal VER reste au niveau bas. Le signal EJ redescend du niveau haut au niveau bas lorsque l'utilisateur interrompt sa pression sur la cassette.

Le déverrouillage de la cassette peut être opéré à l'initiative de l'utilisateur ou du dispositif comme indiqué précédemment.

Bien entendu la présente invention n'est pas limitée au mode de réalisation particulier qui vient d'être décrit mais s'étend à toutes variantes conformes à son esprit.

En particulier, les moyens de lecture/écriture et les moyens d'alimentation par induction précédemment décrits ne sont donnés qu'à titre d'exemple non limitatif et peuvent faire l'objet de nombreuses variantes de réalisation.

De même, les moyens d'entraînement précédemment décrits comprenant une roue à rochet et un électro-aimant, pourront être remplacés par tout autre moyen d'actionnement équivalent, tel qu'un moteur pas à pas.

**Revendications**

1. Dispositif de lecture/écriture de cassette, du type comprenant un boîtier (100) pourvu d'un logement (112), possédant une ouverture, apte à recevoir une cassette (10), et un coulisseau (130) supporté élastiquement dans le logement (112) et qui porte des premiers moyens d'émission/réception (121, 125, 126) aptes à coopérer avec la cassette, caractérisé par le fait que:
   - les premiers moyens d'émission/réception (121, 125, 126) comprennent au moins un élément de photocoupleur et ils sont conçus pour coopérer avec des seconds moyens d'émission/réception (21, 25, 26) prévus sur la cassette (10),
   - les premiers moyens d'émission/réception (121, 125, 126) sont prévus sur la face avant du coulisseau (130) dirigée vers l'ouverture du logement (112),
   - les seconds moyens d'émission/réception (21, 25, 26) sont prévus sur la face de la cassette (10) destinée à être portée en regard de la face avant du coulisseau (130),
   - le coulisseau (130) et chaque cassette (10) sont pourvus de structures de centrage (138, 32) sur leurs surfaces en regard munies respectivement des premiers moyens d'émission/réception (121, 125, 126) et des seconds moyens d'émission/réception (21, 25, 26),
   - le coulisseau (130) est susceptible de translation, dans le logement (112), parallèlement à la direction d'introduction d'une cassette (10), de sorte que lors de l'insertion d'une cassette (10) dans le logement (112) du boîtier, la cassette (10) contacte le coulisseau (130) puis entraîne un léger recul du coulisseau vers le fond du logement (112), et
   - le coulisseau (130) est en outre susceptible de se déplacer tranversalement à la direction d'introduction de la cassette (10) afin d'assurer un auto-centrage du coulisseau (130) sur la cassette (10) et garantir une étroite proximité entre les premiers moyens d'émission/réception (121, 125, 126) et les seconds moyens d'émission/réception (21, 25, 26) lors de l'introduction d'une cassette dans le logement (112) du boîtier.

2. Dispositif selon la revendication 1, caractérisé par le fait que le coulisseau (130) est sollicité élastiquement vers l'ouverture du logement (112).

3. Dispositif selon la revendication 2, caractérisé en ce que, en position de repos, le coulisseau (130) repose contre une butée (144, 146) du boîtier (100), par l'intermédiaire d'au moins une structure (134, 136) en forme de couteau.

4. Dispositif selon l'une des revendications 1 à 3, caractérisé par le fait qu'il comprend un verrou (160) apte à venir en prise avec une cassette (10) pour immobiliser celle-ci en contact avec le coulisseau (130).

5. Dispositif selon la revendication 4, caractérisé par le fait que le verrou (160) est sollicité élastiquement vers une position de travail dans laquelle il est en prise avec la cassette (10), et qu'il est associé à des moyens d'entraînement (200) aptes à déplacer le verrou (160) dans une position de repos dans laquelle la cassette (10) est libérée.

6. Dispositif selon l'une des revendications 4 ou 5, caractérisé par le fait que le verrou (160) est monté pivotant sur le boîtier (100) entre une position de travail et une position de repos.

7. Dispositif selon la revendication 5, caractérisé par le fait que les moyens d'entraînement (200) comprennent, d'une part, une roue dentée (220) solidaire d'une came (210) reposant contre le verrou (160) et, d'autre part, un cliquet (230) entraîné sélectivement pour venir en prise avec la roue dentée (220) et assurer une rotation séquentielle de celle-ci.

8. Dispositif selon la revendication 7, caractérisé par le fait que le cliquet (230) est entraîné par un électro-aimant (240).

9. Dispositif selon l'une des revendications 7 ou 8, caractérisé par le fait que la roue dentée (220) est solidaire d'une structure (222) type cage à écureuil composée d'une pluralité de barreaux parallèles équirépartis autour de l'axe (212) de la roue, et que le cliquet (230) est solidaire d'une butée (239) apte à venir en prise avec ces barreaux, lors du déplacement du cliquet (230) vers les dents de la roue (220), pour contrôler l'angle de pivotement de la roue (220).

10. Dispositif selon l'une des revendications 1 à 9, caractérisé par le fait que le coulisseau (130) porte des moyens (186, 188) aptes à détecter la présence d'une cassette (10) contre le coulisseau (130).

11. Dispositif selon l'une des revendications 1 à 10, caractérisé par le fait que le fond du logement (112) est pourvu de moyens (192, 194) aptes à détecter un recul du coulisseau (130) contre le fond du logement (112), induit par la cassette (10).

12. Dispositif selon l'une des revendications 5 à 9, caractérisé par le fait qu'il comprend des moyens (256, 258) aptes à détecter l'état des moyens d'entraînement (200) associés au verrou (160).

13. Dispositif selon l'une des revendications 10 à 12, caractérisé par le fait que les moyens de détection (186, 188; 192, 194; 256, 258) sont formés d'interrupteurs électriques.

14. Cassette destinée à coopérer avec un dispositif de lecture/écriture conforme à l'une des revendications 1 à 13, caractérisée par le fait qu'elle comprend des moyens (22) formant mémoire, un élément photocoupleur d'émission (25) et un élément photocoupleur de réception (26) destinés à coopérer avec des éléments photocoupleurs homologues (125, 126) intégrés au dispositif de lecture/écriture pour la transmission d'information entre le dispositif de lecture/écriture (100) et la cassette (10), et un enroulement secondaire de transformateur (21), destiné à coopérer avec un enroulement primaire (121) intégré au dispositif de lecture/écriture (100), pour assurer l'alimentation électrique, par induction, de la cassette (10).

15. Cassette selon la revendication 14, caractérisée par le fait qu'elle est pourvue sur sa surface extérieure de moyens de guidage rectilignes (16, 18) aptes à venir en prise avec des rails rectilignes (114) homologues prévus dans le logement (112) d'un dispositif de lecture/écriture (100).

16. Cassette selon l'une des revendications 14 ou 15, caractérisée par le fait qu'elle est pourvue sur sa surface extérieure de cavités (40, 42) aptes à recevoir un verrou (160) du dispositif de lecture/écriture (100).

**Patentansprüche**

1. Lese-/Schreibvorrichtung für Kassetten, enthaltend ein Gehäuse (100), das mit einer Aufnahme (112) versehen ist, die eine Öffnung aufweist, die zur Aufnahme eine Kassette (10) geeignet ist, und einen Schlitten (130), der elastisch in der Aufnahme (112) abgestützt ist, und der erste Sende/Empfangseinrichtungen (121, 125, 126) trägt, die dazu geeignet sind, mit der Kassette zusammenzuwirken dadurch gekennzeichnet, daß:
   – die ersten Sende-/Empfangseinrichtungen (121, 125, 126) wenigstens ein Photokopplerelement enthalten, daß sie dazu bestimmt sind, mit zweiten Sende-/Empfangseinrichtungen (21, 25, 26) zusammenzuwirken, die an der Kassette (10) vorgesehen sind,
   – die ersten Sende-/Empfangseinrichtungen (121, 125, 126) auf der Vorderseite des Schlittens (130) vorgesehen sind, der gegen die Öffnung der Aufnahme (112) gerichtet ist,
   – die zweiten Sende-/Empfangseinrichtungen (21, 25, 26) auf der Seite der Kassette (10) vorgesehen sind, die dazu bestimmt ist, der Vorderseite des Schlittens (130) gegenüberstehend gehalten zu werden,
   – der Schlitten (130) und jede Kassette (10) mit Zentriereinrichtungen (138, 32) an ihren einander gegenüberstehenden Oberflächen versehen sind, die mit den ersten Sende-/Empfangseinrichtungen (121, 125, 126) bzw. den zweiten Sende-/Empfangseinrichtungen (21, 25, 26) vorgesehen sind,
   – der Schlitten (130) in der Aufnahme (112) parallel zur Einführungsrichtung einer Kassette (10) derart verschiebbar ist, daß beim Einführen einer Kassette (10) in die Aufnahme (112) des Gehäuses die Kassette (10) den Schlitten (130) berührt, dann den Schlitten gegen die Hinterseite der Aufnahme (112) leicht verschiebt und
   – der Schlitten (130) darüberhinaus in der Lage ist, sich quer zur Einführrichtung der Kassette (10) zu verstellen, um eine Selbstzentrierung des Schlittens (130) auf die Kassette (10) zu ermöglichen, und eine enge Nachbarschaft zwischen den Sende-/Empfangseinrichtungen (21, 25, 26) nach Einführung einer Kassette in die Aufnahme (112) des Gehäuses zu garantieren.

2. Vorrichtung nach Anspruch 1, dadurch gekennzeichnet, daß der Schlitten (130) gegen die Öffnung der Aufnahme (112) elastisch vorgespannt ist.

3. Vorrichtung nach Anspruch 2, dadurch gekennzeichnet, daß in der Ruhestellung der Schlitten (130) an einem Anschlag (144, 146) des Gehäuses (100) über wenigstens ein Element (134, 136) in Form eines Messers anliegt.

4. Vorrichtung nach einem der Ansprüche 1 bis 3, dadurch gekennzeichnet, daß sie einen Riegel (160) enthält, der dazu geeignet ist, mit einer Kassette (10) in Eingriff zu gelangen, um diese in Berührung mit dem Schlitten (130) festzulegen.

5. Vorrichtung nach Anspruch 4, dadurch gekennzeichnet daß der Riegel (160) elastisch in eine Arbeitsstellung vorgespannt ist, in der er mit der Kassette (10) in Eingriff ist, und daß er Stelleinrichtungen (200) zugeordnet ist, die dazu geeignet sind, den Riegel (110) in eine Ruhestellung zu verstellen, in der die Kassette (10) freigegeben ist.

6. Vorrichtung nach einem der Ansprüche 4 oder 5, dadurch gekennzeichnet, daß der Riegel (160) an dem Gehäuse (100) zwischen einer Arbeitsstellung und einer Ruhestellung verschwenkbar montiert ist.

7. Vorrichtung nach Anspruch 5, dadurch gekennzeichnet, daß die Verstelleinrichtungen (200) einerseits ein Zahnrad (220) aufweisen, das mit einem Nocken (210) fest verbunden ist, der an dem Riegel (110) anliegt, und andererseits eine Klinke (230) aufweisen, die selektiv angetrieben ist, um mit dem Zahnrad (220) in Eingriff zu gelangen und eine schrittweise Drehung desselben hervorzurufen.

8. Vorrichtung nach Anspruch 7, dadurch gekennzeichnet, daß die Klinke (230) von einem Elektromagneten (240) angetrieben ist.

9. Vorrichtung nach einem der Ansprüche 7 oder 8, dadurch gekennzeichnet, daß das Zahnrad (220) fest mit einer Käfigstruktur (222) verbunden ist, die aus mehreren parallelen, um die Achse (212) des Rades gleichmäßig verteilten Stäben zusammengesetzt ist, und daß die Klinke (230) fest mit einem Anschlag (239) verbunden ist, der dazu geeignet ist, mit diesen Stäben bei der Verstellung der Klinke (230) gegen die Zähne des Rades (220) in Eingriff zu gelangen, um den Schwenkwinkel des Rades (220) zu beeinflussen.

10. Vorrichtung nach einem der Ansprüche 1 bis 9, dadurch gekennzeichnet, daß der Schlitten (130) Einrichtungen (186, 188) trägt, die dazu geeignet sind, die Anwesenheit einer Kassette (10) auf dem Schlitten (130) zu ermitteln.

11. Vorrichtung nach einem der Ansprüche 1 bis 10, dadurch gekennzeichnet, daß die Hinterseite der Aufnahme (112) mit Einrichtungen (192, 194) versehen ist, die dazu geeignet sind, eine Zurückschiebung des Schlittens (130) gegen die Hinterseite der Aufnahme (112), hervorgerufen durch die Kassette (10), zu ermitteln.

12. Vorrichtung nach einem der Ansprüche 5 bis 9, dadurch gekennzeichnet, daß sie Einrichtungen (256, 258) enthält, die dazu geeignet sind, den Zustand der dem Riegel (160) zugeordneten Verstelleinrichtungen (200) zu ermitteln.

13. Vorrichtung nach einem der Ansprüche 10 bis 12, dadurch gekennzeichnet, daß die Ermittlungseinrichtungen (186, 188; 192, 194; 256, 258) von elektrischen Schaltern gebildet sind.

14. Kassette, die zum Zusammenwirken mit einer Lese-/Schreibvorrichtung nach einem der Ansprüche 1 bis 13 bestimmt ist, dadurch gekennzeichnet, daß die Speichereinrichtungen (22), ein Sendephotokopplerelement (25) und ein Empfangsphotokopplerelement (26) enthält, die dazu bestimmt sind, mit homologen Photokopplerelementen (125, 126) zusammenzuwirken, die Bestandteil der Lese-/Schreibvorrichtung sind, um Information zwischen der Lese-/Schreibvorrichtung (100) und der Kassette (10) zu übertragen, und weiterhin eine Transformator-Sekundärwicklung (21) enthält, die dazu bestimmt ist, mit einer Primärwicklung (121) zusammenzuwirken, die Bestandteil der Lese-/Schreibvorrichtung (100) ist, um die Stromversorgung der Kassette (10) durch Induktion einzurichten.

15. Kassette nach Anspruch 14, dadurch gekennzeichnet, daß sie an ihrer Außenseite mit geradlinigen Führungseinrichtungen (16, 18) versehen sind, die dazu eingerichtet sind, mit geradlinigen, homologen Schienen (114) in Eingriff zu gelangen, die in der Aufnahme (112) einer Lese-/Schreibvorrichtung (100) vorgesehen sind.

16. Kassette nach einem der Ansprüche 14 oder 15, dadurch gekennzeichnet, daß sie an ihrer Außenseite mit Ausnehmungen (40, 42) versehen ist, die dazu geeignet sind, einen Riegel (160) der Lese-/Schreibvorrichtung (100) aufzunehmen.

## Claims

1. Cassette read/write device, of the type comprising a case (100) provided with a housing (112), having an opening, able to receive a cassette (10) and a slide (130) supported resiliently in the housing (112) and which supports first transmitting/receiving means (121, 125, 126) able to co-operate with the cassette, characterised by the fact that:
   - the first transmitting/receiving means (121, 125, 126) comprise at least one photocoupler element and they are designed to co-operate with second transmitting/receiving means (21, 25, 26) provided on the cassette (10),
   - the first transmitting/receiving means (121, 125, 126) are provided on the front face of the slide (130) directed towards the opening of the housing (112),
   - the second transmitting/receiving means (21, 25, 26) are provided on the face of the cassette (10) intended to be brought into facing relationship with the front face of the slide (130),
   - the slide (130) and each cassette (10) are provided with centering structures (138, 32) on their facing surfaces provided respectively with first transmitting/receiving means (121, 125, 126) and second transmitting/receiving means (21, 25, 26),
   - the slide (130) is able to move by translation, in the housing (112), parallel to the direction of introduction of a cassette (10), so that at the time of insertion of a cassette (10) into the housing (112) of the case, the cassette (10) contacts the slide (130) then causes a slight withdrawal of the slide towards the bottom of the housing (112), and
   - the slide (130) is also able to move transversely with respect to the direction of introduction of the cassette (10) in order to ensure self-centering of the slide (130) on the cassette (10) and to guarantee close proximity between the first transmitting/receiving means (121, 125, 126) and the second transmitting/receiving means (21, 25, 26) when introducing a cassette into the housing (112) of the case.

2. Device according to claim 1, characterised by the fact that the slide (130) is biased resiliently towards the opening of the housing (112).

3. Device according to claim 2, characterised in that, in the inoperative position, the slide (130) rests against an abutment (144, 146) of the case (100), through the intermediary of at least one knife-shaped structure (134, 136).

4. Device according to one of claims 1 to 3, characterised by the fact that it comprises a bolt (160) able to come into engagement with a cassette (10) in order to immobilise the latter in contact with the slide (130).

5. Device according to claim 4, characterised by the fact that the bolt (160) is biased resiliently towards a working position in which it is in engagement with the cassette (10) and that it is associated with entrainment means (200) able to move the bolt (160) into an inoperative position in which the cassette (10) is released.

6. Device according to one of claims 4 or 5, characterised by the fact that the bolt (160) is mounted to pivot on the case (100) between a working position and an inoperative position.

7. Device according to claim 5, characterised by the fact that the entrainment means (200) comprise, on the one hand, a toothed wheel (220) integral with a cam (210) resting against the bolt (160) and, on the other hand, a pawl (230) entrained selectively in order to come into engagement with the toothed wheel (220) and ensure a sequential rotation of the latter.

8. Device according to claim 7, characterised by the fact that the pawl (230) is entrained by an electromagnet (240).

9. Device according to one of claims 7 or 8, characterised by the fact that the toothed wheel (220) is integral with a structure (222) of the squirrel-cage type composed of a plurality of parallel bars distributed equally about the axis (212) of the wheel and that the pawl (230) is integral with an abutment (239) able to come into engagement with these bars, when the pawl (230) moves towards the teeth of the wheel (220), in order to control the pivoting angle of the wheel (220).

10. Device according to one of claims 1 to 9, characterised by the fact that the slide (130) supports means (186, 188) able to detect the presence of a cassette (10) against the slide (130).

11. Device according to one of claims 1 to 10, characterised by the fact that the bottom of the housing (112) is provided with means (192, 194) able to detect a withdrawal of the slide (130) against the bottom of the housing (112), caused by the cassette (10).

12. Device according to one of claims 5 to 9, characterised by the fact that it comprises means (256, 258) able to detect the state of the entrainment means (200) associated with the bolt (160).

13. Device according to one of claims 10 to 12, characterised by the fact that the detection means (186, 188; 192, 194; 256, 258) are formed by electric switches.

14. Cassette intended to co-operate with a read/write device according to one of claims 1 to 13, characterised by the fact that it comprises means (22) forming a memory, a transmitting photocoupler element (25) and a receiving photocoupler element (26) intended to co-operate with homologous photocoupler elements (125, 126) integrated in the read/write device for the transmission of information between the read/write device (100) and the cassette (10), and a secondary transformer winding (21) intended to co-operate with a primary winding (121) integrated in the read/write device (100), in order to ensure the electrical power supply, by induction, of the cassette (10).

15. Cassette according to claim 14, characterised by the fact that it is provided on its outer surface with rectilinear guide means (16, 18) able to come into engagement with homologous rectilinear rails (114) provided in the housing (112) of a read/write device (100).

16. Cassette according to one of claims 14 or 15, characterised by the fact that it is provided on its outer surface with cavities (40, 42) able to receive a bolt (160) of the read/write device (100).

FIG-1

EP 0 289 426 B1

## FIG-2

## FIG_3A  Insertion et extraction commandées par l'utilisateur et autorisées par le dispositif

## FIG_3B  Insertion non autorisée

## FIG-3C

Insertion autorisée et extraction
à l'initiative du dispositif

## FIG-3D

Insertion autorisée, extraction
non autorisée